# EUROPÄISCHE PATENTANMELDUNG

(11) **EP 1 031 470 A1**
(43) Veröffentlichungstag der Anmeldung: **30.08.2000**
(21) Anmeldenummer: 99103725.0
(22) Anmeldetag: 25.02.1999
(51) Int. Cl.: B60R 21/00

(54) **Einrichtung für den Insassenschutz in einem Fahrzeug**

(71) Anmelder: SIEMENS AKTIENGESELLSCHAFT, 80333 München (DE)
(72) Erfinder: Roth, Christoph, Dr., 141-8641 Shinagawa-Ku Tokyo (JP); Waldmann, Alexander, 93059 Regensburg (DE); Hamperl, Reinhard, 93096 Köfering (DE); Stierle, Thomas, 93059 Regensburg (DE); Rösl, Reinhard, 93173 Wenzenbach (DE); Mader, Gerhard, Dr., 93107 Thalmassing (DE)

(57) **Zusammenfassung**

Eine Einrichtung für den Insassenschutz in einem Fahrzeug enthält eine Steuereinheit (1) für ein Insassenschutzmittel (AB) und eine getrennt von der Steuereinheit (1) ausgebildete Auswerteeinheit (2), die mit einem ersten und mit einem zweiten Sensor (3,4) zum Erfassen eines Objektes oder einer Person (P) im Innenraum des Fahrzeugs verbunden ist. Die Auswerteeinheit (2) liefert insassenbezogene Daten an die Steuereinheit (1).

## Beschreibung

Die Erfindung betrifft eine Einrichtung für den Insassenschutz in einem Fahrzeug.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt. Zum Erkennen eines Aufpralls werden Aufprallsensoren wie beispielsweise Beschleunigungssensoren verwendet.

Eine bekannte Einrichtung für den Insassenschutz (US 5 785 347-A) enthält eine Steuereinheit für ein Insassenschutzmittel, wie z.B. Airbag, Gurtstraffer, etc.. Die Steuereinheit ist als Mikroprozessor ausgebildet. Folgende Sensoren liefern Sensorsignäle an die Steuereinheit: Ein Aufprallerkennungssensor, ein Sensor zur Aufprallfrüherkennenung, ein Sensor zum Erkennen der Aufprallschwere, ein Gewichtssensor, zwei Sensoren zur Ermittlung der Insassenposition, ein Sensor zum Erfassen eines Kindersitzes, ein Sensor zum Ermitteln des Gurtschloßzustandes.

Die Steuereinheit muß für die große Anzahl von Sensoren eine große Anzahl von Schnittstellen bereitstellen. Zudem erfordert die hohe Sensoranzahl die Bereitstellung einer erheblichen Rechenleistung der Steuereinheit zur Signalverarbeitung, um den zeitkritischen Anforderungen des Insassenschutzes gerecht zu werden.

Aufgabe der Erfindung ist es, eine Einrichtung für den Insassenschutz in einem Fahrzeug zu schaffen, die eine leistungsstarke rechentechnische Infrastruktur ohne die Verwendung von Spezialbauelementen bereitstellt, und die den spezifischen Rechenprozessen einer Insassenschutzeinrichtung Rechnung trägt.

Die Aufgabe wird gelöst durch die Merkmale des Patentanspruchs 1.

Dabei wird die konventionelle Steuereinheit für ein Insassenschutzmittel in Form eines Mikroprozessors von Rechenprozessen entlastet, die der Insassen- oder Objekterfassung zuzurechnen sind, und die zunächst keinerlei Bindung zu Prozessen die Aufprallerkennung betreffend erkennen lassen. Rechenprozesse zur Aufprallerkennung werden nach wie vor von der Steuereinheit durchgeführt. Daneben ist jedoch erfindungsgemäß eine räumlich getrennt von der Steuereinheit angeordnete Auswerteeinheit vorgesehen, die mit diversen Sensoren zur Personen- oder Objekterfassung verbunden ist. Die Auswerteeinheit ist mit der Steuereinheit verbunden und liefert vorzugsweise ausgewertete Daten eine Insassen- oder Objektposition betreffend an die Steuereinheit.

Damit ist die Steuereinheit weitgehend entlastet. Eine Bereitstellung von höherer Rechenleistung in der Steuereinheit beispielsweise durch den Einsatz leistungsstärkerer Prozessoren wird vermieden. Eine durch die Verwendung eines neuen Prozessors erforderliche Umgestaltung des Leiterplatten-Layouts wird vermieden. Die Schnittstellenanzahl an der Steuereinheit kann gering gehalten werden. Es sind nur noch Schnittstellen für eine Anbindung der Aufprallerfassung sowie eine einzige Schnittstelle zur Anbindung der Auswerteeinheit für die Insassen- und Objekterfassungssensoren erforderlich. Auch hinsichtlich der Schnittstellen erübrigt sich die Verwendung eines entsprechend aufwendigen Prozessors oder die Umgestaltung ganzer Steuereinheitsstrukturen.

Vorzugsweise liefert die Auswerteeinheit Daten hinsichtlich einer erfassten Insassen- oder Objektposition an die Steuereinheit, die bereits zum schnellen und aufwandsarmen Weiterverarbeiten in der Steuereinheit aufbereitet sind. Kann beispielsweise der zu steuernde Airbag in drei Stufen/Zustände aufgeblasen werden und ist der zu aktivierende Zustand eine Funktion der Insassen- oder Objektposition, so erfolgt in der Auswerteeinheit eine Auswertung der von den Sensoren zur Insassen- und Objekterfassung gelieferten Signale bereits dahingehend, daß durch die Auswerteeinheit bestimmt oder zumindest vorgeschlagen wird, welche Stufe des Airbags bei einem Aufprall aufgeblasen werden soll. Eine entsprechende codierte Mitteilung ergeht von der Auswerteeinheit an die Steuereinheit. Erkennt die Steuereinheit durch Auswertung von Aufprallsensorsignalen darüber hinaus einen zum Auslösen des Insassenschutzmittels würdigen Aufprall, so aktiviert die Steuereinheit im folgenden die von der Auswerteeinheit vorgeschlagene/n Stufen des Airbags.

Die Sensoren zum Erfassen einer Person oder eines Insassen können auf vielfältige Weise ausgebildet sein: Vorzugsweise erfassen sie unterschiedliche physikalische, für die Insassenposition signifikante Größen oder beruhen zumindest auf unterschiedlichen Meßprinzipien. Damit verringert sich die Wahrscheinlichkeit einer Fehlbewertung der Insassenposition. Vorzugsweise werden berührungslose Sensoren zum Abtasten eines Objektes oder eines Insassen verwendet, die den Komfort des Insassen nicht beeinträchtigen. Dazu eignen sich Infrarotsensoren, Mikrowellensensoren, Ultraschallsensoren, etc..

Doch auch Gewichtssensoren zum Ermitteln eines Gewichtes auf einem Fahrzeugsitz werden unter Erfassungssensoren für Personen oder Objekte subsumiert, da aufgrund des ermittelten Gewichts auf einen Insassen oder ein Objekt auf dem Fahrzeugsitz rückgeschlossen werden kann. Ferner können als Sensoren Wärmefühler in Form von Infrarotaufnehmern verwendet werden, die das Vorhandensein und die Position eines Insassen erfassen können.

Die Auswerteeinheit ist vorzugsweise als Mikroprozessor ausgebildet. Sie weist in jedem Fall eine getrennt von der Steuereinheit ausgebildete Hardware auf. Vorzugsweise ist die Auswerteeinheit räumlich beabstandet von der Steuereinheit angeordnet und über eine Datenleitung mit dieser verbunden. So ist beispielsweise die Steuereinheit am Kraftfahrzeugtunnel angeordnet, die Auswerteeinheit dagegen bei einem der angeschlossenen Sensoren, also beispielsweise im Sitz zusammen mit dem Gewichtssensor oder am Fahrzeughimmel gemeinsam mit einem Infrarotsensor. Die Auswerteeinheit ist vorzugsweise räumlich benachbart zu einem der Sensoren angeordnet. Insbesondere bilden zumindest ein Sensor und die Auswerteinheit ein Gerät, z.B. mit einem gemeinsamen Gehäuse. Ein Datenübertragungsprotokoll auf dieser Datenleitung ist entsprechend den Bedürfnissen des Datenaustausches vorzusehen.

Weitere vorteilhafte Weiterbildungen der Erfindung sind durch die Unteransprüche gekennzeichnet.

Ausführungsbeispiele der Erfindung und ihrer Weiterbildungen werden anhand der Zeichnung näher erläutert. Es zeigen:

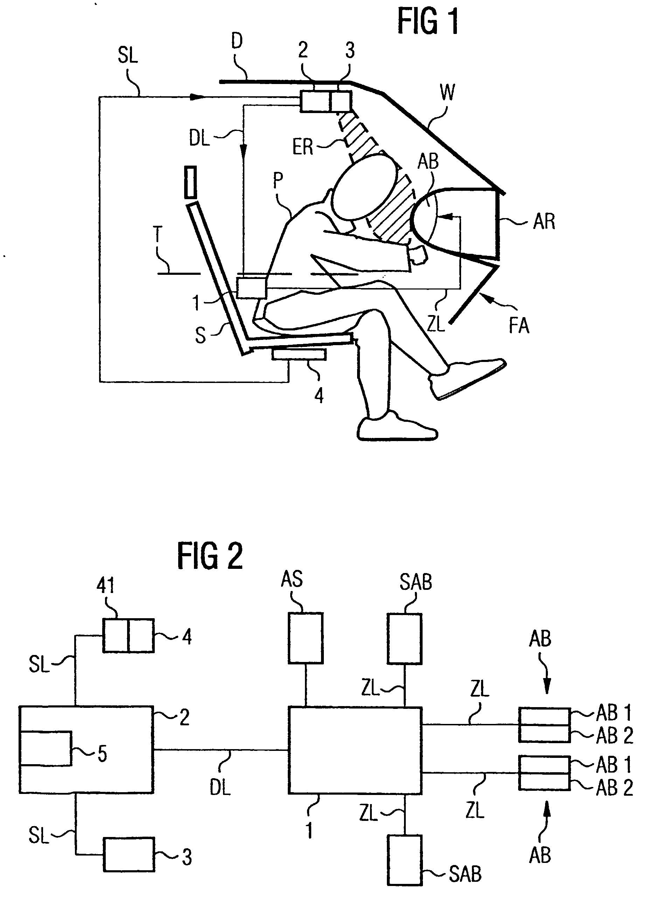

Figur 1 einen Querschnitt einer Fahrgastzelle, und Figur 2 ein Blockschaltbild einer erfindungsgemäßen Einrichtung.

Figur 1 zeigt einen Querschnitt der vorderen Fahrgastzelle, beifahrerseitig, wobei alle Elemente symbolisch eingezeichnet sind. Dabei ist der Fahrzeuginnenraum durch ein Dach D, eine Windschutzscheibe W, ein Armaturenbrett AR und ein Fußablage FA begrenzt. Zur Abgrenzung des Fahrzeuginnenraums muß jedoch nicht notwendigerweise das Dach D und damit eine geschlossene Fahrgastzelle vorhanden sein. Es ist ein Fahrzeugsitz S ersichtlich, auf dem eine Person P in vorverlagerter Oberkörperposition sitzt. Am Dach D ist ein Sensor 3 zum Erfassen eines Objektes oder einer Person angeordnet. Der optsich abtastende Sensor 3 weist einen eingezeichneten Wirkungsbereich ER auf. Das Armaturenbrett AR enthält ein Beifahrerairbagmodul AB als Insassenschutzmittel im zusammengefalteten Zustand. In entfaltetem Zustand schießt der Beifahrerairbag in Richtung Kopf der eingezeichneten Person P. Es ist ersichtlich, daß mit dem eingezeichneten Sensor 3 der Gefahrenbereich vor einem zusammengefalteten Airbagmodul AB in Aufblasrichtung überwacht werden soll. Wird ein Insasse oder ein Kindersitz in diesem Wirkungsbereich ER erkannt, so wird ein Auslösen des Beifahrerairbagmoduls AB verhindert oder geeignet dosiert. Der Sensor 3 kann auch auf den Fahrzeugsitz S gerichtet sein und eine Abweichung einer Person aus seiner normalen Sitzposition erfassen.

Ein zweiter Sensor 4 ist zur Gewichtserkennung für den Fahrzeugsitz ausgebildet. Der Gewichtssensor 4 kann dabei als gewichtssensitive Matte in den Fahrzeugsitz S eingebracht sein oder Kraftsensoren zwischen dem Fahrzeugsitz und dem Fahrzeugboden enthalten. Durch die Aufnahme des Gewichtes kann beispielsweise ein Kindersitz von einem Insassen unterschieden werden. Ferner können schwere Personen von leichten Personen unterschieden und aufgrund dessen Rückschlüsse auf die Sitzposition gewonnen werden. Zusätzlich kann über die bloße Ermittlung des Absolutgewichts hinaus eine Schwerpunktserfassung/ermittlung durchgeführt werden, die weiteren Aufschluß auf eine Insassenposition liefert.

Eine Auswerteeinheit 2 ist bei dem optischen Sensor 3 angeordnet und bildet zusammen mit diesem eine bauliche Einheit. Der Gewichtssensor 4 ist wiederum über eine Sensorleitung SL mit der Auswerteeinheit 2 verbunden. Die Auswerteeinheit 2 schlägt nach Auswertung der optischen Daten und der Gewichtsdaten der Steuereinheit 1 vor, welche Stufe des Beifahrerairbagmoduls AB angesichts der ermittelten Insassen- oder Objektposition bei einem Aufprall für einen bestmöglichen Schutz des Insassen zu aktivieren ist. Diese Information wird über die Datenleitung DL der Steuereinheit 1 in codierter Form zugetragen.

Die Steuereinheit 1 ist am Fahrzeugtunnel T angeordnet. Sie steuert wiederum über eine Zündleitung ZL das Beifahrerairbagmodul AB.

Figur 2 zeigt ein Blockschaltbild der erfindungsgemäßen Einrichtung. Eine Auswerteeinheit 2 ist über eine Datenleitung DL mit einer Steuereinheit 1 verbunden. Die Datenleitung DL kann einem vorgegebenen Standard folgen. Die Steuereinheit 1 ist wiederum mit einem bei der Steuereinheit 1 oder entfernt davon angeordneten Aufprallsensor AS verbunden. Die Steuereinheit 1 wertet die von dem Aufprallsensor AS gelieferten Signale aus und steuert in Abhängigkeit davon ein oder mehrere Insassenschutzmittel SAB, AB, die über Zündleitungen ZL mit der Steuereinheit 1 verbunden sind. Als Inssassenschutzmittel SAB, AB sind randseitig je ein Seistenairbagmodul SAB sowie ein Fahrerairbag AB und ein Beifahrerairbag AB vorgesehen. Fahrerairbag AB und Beifahrerairbag AB sind jeweils zweistufig AB1, AB2 aufblasbar.

Drei Sensoren 2,3,4 zum Erfassen eines Insassen oder eines Objektes sind mit der Auswerteeinheit 2 verbunden, die Sensoren 3 und 4 dabei über Sensorleitungen SL. Der Sensor 5 ist am Ort der Auswerteeinheit 2 angeordnet, sodaß sein Signal unmittelbar der Auswerteeinheit 2 zugeführt werden kann. Das Signal des Sensors 3 wird als analoges Signal der Auswerteeinheit 2 zugeführt. Das Signal des Sensors 4 wird in einer Vorauswerteeinheit 41 vorausgewertet, z.B. diskretisiert und dann der Auswerteeinheit 2 zugeführt.

Ist beispielsweise die Datenübertragung zwischen dem Sensor 4 und der Auswerteeinheit 2 bidirektional ausgebildet, so übernimmt die Auswerteeinheit 2 die Funktion des Kommunikations-Masters. Sie kann z.B. von dem Sensor 4 bzw seiner Vorauswerteeinheit 41 Diagnoseergebnisse abfragen etc.. Die Auswerteeinheit 2 kann dabei über einen Datenbus mit einer Vielzahl von Sensoren 3,4,5 zur Insassen- oder Objekterfassung verbunden sein.

## Patentansprüche

1. Einrichtung für den Insassenschutz in einem Fahrzeug,
- mit einer Steuereinheit (1) für ein Insassenschutzmittel (AB),
- mit einem ersten und mit einem zweiten Sensor (3,4) zum Erfassen eines Objektes oder einer Person (P) im Innenraum des Fahrzeugs,
- mit einer räumlich getrennt von der Steuereinheit (1) ausgebildeten und den Sensoren zugeordneten Auswerteeinheit (2),
- wobei die Auswerteeinheit (2) Daten an die Steuereinheit (1) liefert.

2. Einrichtung nach Anspruch 1, bei der die Sensoren (3,4) unterschiedliche physikalische Größen erfassen.

3. Einrichtung nach Anspruch 1 oder Anspruch 2, bei der zumindest einer der Sensoren (3,4,5) unter Zwischenschaltung einer Vorauswerteeinheit (41) mit der Auswerteeinheit (2) verbunden ist.

4. Einrichtung nach einem der vorhergehenden Ansprüche, bei der die Daten abhängig sind von einem aus Sensorsignalen abgeleiteten Insassen- oder Objektzustand.

5. Einrichtung nach Anspruch 4, bei der das Insassenschutzmittel (AB) in verschiedenen Zuständen betrieben werden kann, und bei der der übermittelte Insassen- oder Objektzustand korrespondiert mit einem Zustand des Insassenschutzmittels, der von der Auswerteeinheit (2) vorgeschlagen wird.

6. Einrichtung nach einem der vorhergehenden Ansprüche, bei der weitere Sensoren (5) zum Erfassen eines Objektes oder einer Person (P) im Innenraum des Fahrzeugs mit der Auswerteeinheit (2) verbunden sind.

7. Einrichtung nach einem der vorhergehenden Ansprüche, bei der einer der Sensoren (3,4,5) als optischer Sensor ausgebildet ist.

8. Einrichtung nach einem der vorhergehenden Ansprüche, bei der einer der Sensoren (3,4,5) als Gewichtssensor ausgebildet ist.

9. Einrichtung nach einem der vorhergehenden Ansprüche, bei der einer der Sensoren (3,4,5) als Wärmefühler ausgebildet ist.

10. Einrichtung nach einem der vorhergehenden Ansprüche, bei der die Auswerteeinheit (2) über eine einzige Datenleitung (DL) mit der Steuereinheit (1) verbunden ist, und bei der die Auswerteeinheit (2) zur Koordination der Kommunikation mit den Sensoren (3,4,5) ausgebildet ist.
